# EUROPEAN PATENT APPLICATION

(11) **EP 3 683 982 A1**
(43) Date of publication of application: **22.07.2020**
(21) Application number: 19151901.6
(22) Date of filing: 15.01.2019
(51) Int. Cl.: H04B 10/071

(54) **A METHOD FOR RANGING IN A PASSIVE OPTICAL NETWORK, AN OPTICAL ENDPOINT AND OPTICAL CENTRAL OFFICE**

(71) Applicant: Nokia Solutions and Networks Oy, 02610 Espoo (FI)
(72) Inventor: Straub, Michael, 70435 Stuttgart (DE)
(74) Representative: IP HILLS NV

(57) **Abstract**

A method for ranging of an unranged optical network unit ONU (231) in a passive optical network PON comprises the steps of:
- receiving at the unranged ONU (231) a ranging request (401) transmitted by the optical line termination OLT (211);
- generating at or near the unranged ONU vibrations (404) where the optical fibre (241) whereto the unranged ONU (231) is coupled, is exposed to;
- performing an optical reflectometry measurement (405) at or near the OLT (211), the optical reflectometry measurement (405) being impacted by the vibrations (404);
- generating ranging information from the optical reflectometry measurement (405); and
- providing the ranging information (407) to the unranged ONU (231).

## Description

### Technical Field

Various example embodiments relate to ranging of endpoints in a passive optical network wherein such endpoints are coupled to a central office via shared links of an optical distribution network.

### Background

In a Passive Optical Network (abbreviated PON), an optical line termination (abbreviated OLT) in a central office (abbreviated CO) is coupled to multiple optical network units (abbreviated ONUs) in respective optical endpoints via an optical distribution network (ODN). The ODN typically has a tree and branch architecture and comprises optical fibres and passive splitter/combiners that split the optical signals in the downstream direction from CO to ONUs, and multiplexer the optical signals in the upstream direction from ONUs to CO. In a simple example where a CO is connected to n optical endpoints, n being a positive integer number, the OLT at the CO is connected via a single-mode optical fibre - the so-called feeder fibre - to a 1:n passive optical splitter which in turn is connected via n single-mode fibres - the so-called distribution fibres - to the n ONUs in the respective optical endpoints. To avoid collisions amongst the n users on the shared part of the ODN, for instance the feeder fibre in the above example, a time-division multiplexing (abbreviated TDM) protocol is used in the downstream direction and a time-division multiple access (abbreviated TDMA) protocol is used in the upstream direction.

Since ONUs are located at different distances from the OLT, the upstream travel times of their respective transmissions also differ. Therefore, to ensure that data arrive in the correct timeslots at the OLT and prevent collisions between upstream transmissions of different ONUs, the difference in distances from the respective ONUs to the OLT must be compensated for through transmission delays. Typically, an ONU that is located at a closer distance from the OLT shall apply a larger transmission delay than an ONU that is located at a farther distance from the OLT. As a result of the so-called equalisation delays, each ONU is located at the same virtual distance from the OLT and will have a same Round-Trip Time (abbreviated RTT) to the OLT. The process wherein the distances from the ONUs to the OLT are determined and wherein the so-called equalization delays to be applied by the different ONUs are calculated, is generally known as the ranging process. Ranging must be applied when a PON is taken into operation and each time a new, unranged ONU connects with the OLT. Existing implementations of PONs foresee a ranging window, that is a time window wherein transmission to/from already ranged ONUs is interrupted in order to enable new, unranged ONUs to range.

### Summary

In applications with tight latency requirements like for instance mobile fronthauling wherein mobile 4G or mobile 5G base stations are connected to ONUs of a PON, a traditional ranging process enabling new unranged ONUs to range within a ranging time window is unacceptable because the size of the ranging time window is too long to satisfy the latency requirements. For one-way transmission up to 10 kilometres, the latency should stay below 100 a 150 microseconds according to mobile 4G or 5G standards. The length of a standard ranging windows wherein no upstream transmissions can take place is in the range of 200 microseconds, which is incompatible with the low latency requirements of mobile 4G or 5G standards.

Amongst others, it is an object of embodiments of the invention to disclose embodiments of a method and devices for ranging of an unranged ONU in a PON that provides a solution for low latency applications like mobile fronthauling, but still remains simple and cost-efficient to implement.

This object is achieved, according to a first example aspect of the present disclosure, by a method as defined by claim 1, for ranging of an unranged optical network unit, abbreviated unranged ONU, in a passive optical network PON comprising an optical line termination OLT, an optical distribution network ODN and a plurality of optical network units ONUs, the method comprising:
- the unranged ONU receiving a ranging request transmitted by the OLT;
- generating at or near the unranged ONU vibrations where an optical fibre of the ODN whereto the unranged ONU is coupled, is exposed to;
- performing an optical reflectometry measurement at or near the OLT, the optical reflectometry measurement being impacted by the vibrations;
- generating ranging information from the optical reflectometry measurement; and
- providing the ranging information to the unranged ONU.

Thus, in embodiments of the method, the optical fibre coupled to the unranged ONU is exposed to vibrations by an active vibration unit that is integrated in the unranged ONU or located in front of the unranged ONU. The optical fibre is exposed to vibrations as soon as the unranged ONU receives a ranging request from the OLT. This ranging request may be a standardized signal, recognizable by all ONUs, and transmitted at regular time intervals to invite new unranged ONUs in the PON to start the ranging process. Each unranged ONU, upon receipt of the ranging request, consequently may start to expose the optical fibre whereto it is coupled to vibrations. Data transmission by other ONUs that have already ranged earlier need not be interrupted while new unranged ONUs expose the respective optical fibres coupled thereto to vibrations. The vibrations generated by the new unranged ONUs may have the same, predefined frequency, or they may have different frequencies that are either predefined or determined at the time the ranging request is received from the OLT. After having transmitted the ranging request, the OLT also activates an optical reflectometry measurement. The optical reflectometry measurement may for instance be executed by a Coherent Rayleigh Optical Domain Reflectometry measurement unit, abbreviated COTDR measurement unit, that sends laser pulses in a certain wavelength along the optical fibres in downstream direction and measures the backscattered Rayleigh signals wherein vibrations are induced by the unranged ONU. Time information indicative for the time a laser pulse is sent and time information indicative for the time its backscattered Rayleigh signal with induced vibrations is received, is logged by the COTDR measurement unit. This raw time information may be forwarded to the OLT or to a management unit that calculates the Round-Trip Time (RTT) between OLT and unranged ONU, or the distance between OLT and unranged ONU, and ultimately also the equalization delay to be applied by the unranged ONU for future data transmission. Alternatively, the COTDR measurement unit itself may calculate the RTT and/or the distance and/or the equalisation delay from the raw time information and deliver the already processed information to the OLT. The OLT at last transmits the equalization delay as well as the assigned TDMA timeslot(s), jointly named ranging information, to the unranged ONU. Since upstream transmissions by other ONUs that have already ranged earlier need not be interrupted while the optical fibre is exposed to vibrations by an unranged ONU, a ranging window wherein all upstream transmission is interrupted is no longer required. New, unranged ONUs in other words can range within a PON that is used for applications with low latency requirements like mobile fronthauling.

In example embodiments of the method for ranging of an unranged ONU, as defined by claim 2, the optical reflectometry measurement is performed by a Coherent Rayleigh Optical Time Domain Reflectometry unit, abbreviated COTDR unit, using Distributed Acoustic Sensing, abbreviated DAS.

Indeed, backscattered Rayleigh signals are known to enable measurement of vibrations and strain along pipes, bridges or roads, enabling to estimate their structural health. A COTDR unit that generates and sends laser pulses in a certain wavelength along an optical fibre and uses Distributed Acoustic Sensing to measure vibrations in the backscattered Rayleigh signals as a function of time after pulse transmission, consequently is a good candidate technology enabling to implement embodiments of the method for ranging an unranged ONU in a PON. The COTDR unit may be integrated in the OLT, or in alternative embodiments may be coupled to plural OLTs at a central office via an optical switch such that a single COTDR unit can be used to enable ranging of unranged ONUs in multiple PONs. A single COTDR unit may for example serve 8 OLTs or 16 OLTs on a single linecard in the central office. This way, embodiments of the method for ranging of ONUs may be implemented in a cost-efficient manner, sharing the additional hardware needed at the central office across several PONs.

In example embodiments of the method for ranging of an unranged ONU, as defined by claim 3, the method is performed without interruption of data transmission by other ONUs already ranged in said PON.

Indeed, although embodiments of the method may be used to enable unranged ONUs to range during a ranging window wherein transmission by other ONUs is interrupted, embodiments of the method are particularly advantageous when performed without interruption of data transmission by other ONUs such that these other ONUs can be used for applications with low latency requirements like for instance 4G/5G mobile fronthauling.

In example embodiments of the method for ranging of an unranged ONU, as defined by claim 4, the frequency of the vibrations generated at or near the unranged ONU is determined as a function of an identity of the unranged ONU.

This way, using predefined vibration frequencies that are determined in dependency of an identity of the unranged ONU, for instance the ONU serial number, the ONU address or some other unique ONU identification, helps to distinguish between ONUs in situations where more than one new unranged ONU attempts to range in response to a ranging request from the OLT. Alternative embodiments of the method wherein multiple ONUs use the same vibration frequency require an additional step wherein for instance the ONU address or some other identifier is exchanged with the ONU after measurement of the vibrations by the optical reflectometry measurement unit.

The object is further achieved, according to a second example aspect of the present disclosure, by an optical endpoint as defined by claim 5, for a passive optical network PON comprising an optical line termination OLT, an optical distribution network ODN and a plurality of optical network units ONUs, the optical endpoint comprising:
- an optical network unit ONU configured to receive a ranging request transmitted by the OLT; and
- a vibration unit integrated in or coupled to the ONU and configured to expose in response to the ranging request an optical fibre of the ODN coupled to the ONU to vibrations, the vibrations being measurable at or near the OLT during an optical reflectometry measurement used to generate ranging information for the ONU.

Thus, example embodiments of the invention concern an optical endpoint that comprises in addition to an ONU also a vibration unit. The vibration unit preferably may be integrated in the ONU to simplify powering and management thereof and to avoid that an additional device must be installed. Alternatively however, the vibration unit may be a separate device that connects with the ONU and that is installed in front of the ONU. The vibration unit incorporates technology that enables to expose the optical fibre coupled to the ONU to vibrations. This vibrating technology may be an electromotor, a magnetic component, a piezo-electric transducer, etc. The vibrating unit operates under control of the ONU and exposes the optical fibre to vibrations after the ONU has received a ranging request from the OLT. The vibrations must have a magnitude and a frequency detectable by an optical reflectometry measurement unit at the OLT that sends laser pulses in the optical fibres of the PON and extracts time information from the sent pulses and their backscattered reflections recognizable through the vibrations induced therein.

In sample embodiments of the optical endpoint for a PON, as defined by claim 6, the vibration unit comprises a motor around which the optical fibre of the ODN coupled to the ONU is coiled.

Thus, a possible implementation of the vibration unit relies on an electrical motor that exposes the optical fibre to vibrations. The frequency of the motor preferably is controllable such that also the frequency of the vibrations becomes controllable. The optical fibre runs along the motor in order to be exposed to the vibrations. The accuracy of the RTT, the distance or the equalization delay calculated from the time information extracted during the optical reflectometry measurement increases when the optical fibre is coiled as a fibre spool around the motor. The accuracy further increases with increasing number of windings of the optical fibre around the motor.

In sample embodiments of the optical endpoint for a PON, as defined by claim 7, the frequency of the vibrations is determined as a function of an identity of the ONU.

As already explained above, using predefined vibration frequencies that are determined in dependency of an identity of the unranged ONU, for instance the ONU serial number, the ONU address or some other unique ONU identification, helps to distinguish between ONUs in situations where more than one new unranged ONU attempts to range in response to a ranging request from the OLT. Alternative embodiments of the method wherein multiple ONUs use the same vibration frequency require an additional step wherein for instance the ONU address or some other identifier is exchanged with the ONU after measurement of the vibrations by the optical reflectometry measurement unit, for example introducing a random delay for activation of the vibration unit and later on performing a correlation between delay and serial number of the ONU.

The above-defined object is further achieved, according to a third example aspect of the present disclosure, by an optical central office as defined by claim 8, for a passive optical network PON comprising an optical line termination OLT, an optical distribution network ODN and a plurality of optical network units ONUs, the optical central office comprising:
- the optical line termination OLT; and
- an optical reflectometry measurement unit configured to perform an optical reflectometry measurement and comprising means for measurement of vibrations of an optical fibre in backscattered signals by an unranged ONU, the optical reflectometry measurement unit being activatable by the OLT after the OLT has transmitted a ranging request in the PON; and
- means for generating ranging information for an unranged ONU from the optical reflectometry measurement.

### Brief Description of the Drawings

Some example embodiments will now be described with reference to the accompanying drawings.
Fig. 1 shows a Passive Optical Network;
Fig. 2 shows a Passive Optical Network comprising embodiments of the optical central office and optical endpoint;
Fig. 3 shows a vibration unit as used in embodiments of the optical endpoint; and
Fig. 4 illustrates an embodiment of the method for ranging of an unranged ONU in a Passive Optical Network.

### Detailed Description of Embodiment(s)

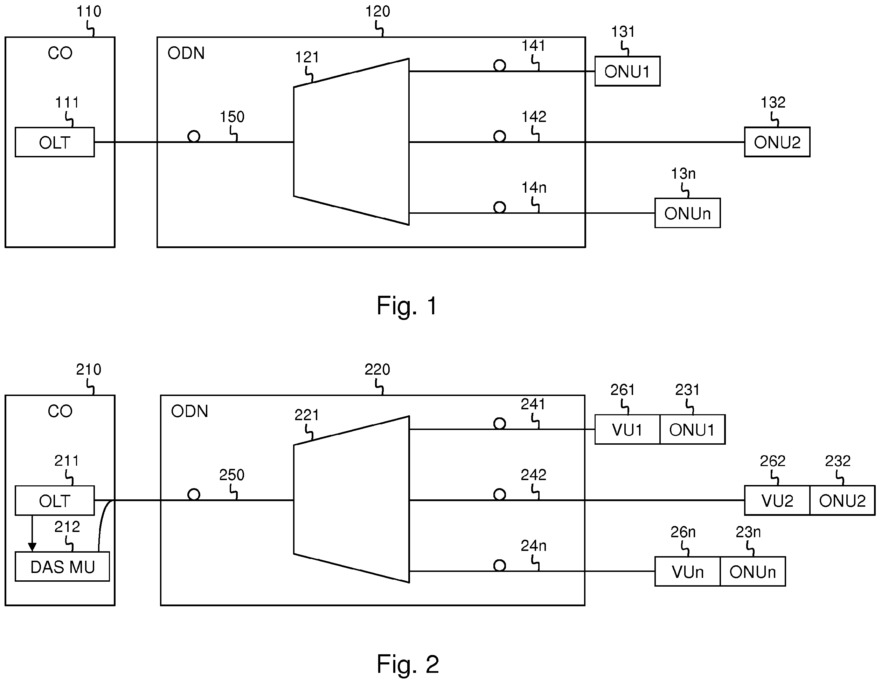

Fig. 1 shows the typical architecture of a Passive Optical Network or PON. An optical line termination, OLT or 111, at a central office, CO or 110, is coupled to multiple optical endpoints, ONU1 or 131, ONU2 or 132, ..., ONUn or 13n, via an optical distribution network, ODN or 120. The optical distribution network 120 has a tree-and-branch architecture and thereto comprises a single-mode optical feeder fibre 150, a passive 1:n splitter/multiplexer 121, and n single-mode optical distribution fibres 141, 142, ..., 14n or drop fibres that connect the passive optical splitter to respective ones of the optical endpoints 131, 132, ..., 13n. In example embodiments, n may for instance be 64. Typically, the central office 110 shall host multiple OLTs, similar to OLT 111. In example embodiments, 8 OLTs or 16 OLTs may for instance be integrated on a single linecard. The feeder fibre 150 is shared for downstream transmissions towards multiple ONUs and upstream transmissions from multiple ONUs. To avoid collisions between the n users sharing the PON, a time-division multiplexing or TDM protocol is used in downstream direction and a time-division multiple access or TDMA protocol is used in upstream direction. The ONUs 131, 132, ..., 13n in other words receive data in different timeslots and transmit data in different timeslots assigned to them. To avoid collisions between upstream transmissions of ONUs located at different distances from the OLT, the difference in distance from the OLT is compensated for through equalisation delays. As a result of the equalisation delays, all ONUs are at the same virtual distance from the OLT. To determine the equalisation delays, a ranging process is applied wherein either the round-trip time or distance between the OLT and each of the ONUs is determined, and the difference in RTT or distance is compensated for through an equalisation delay.

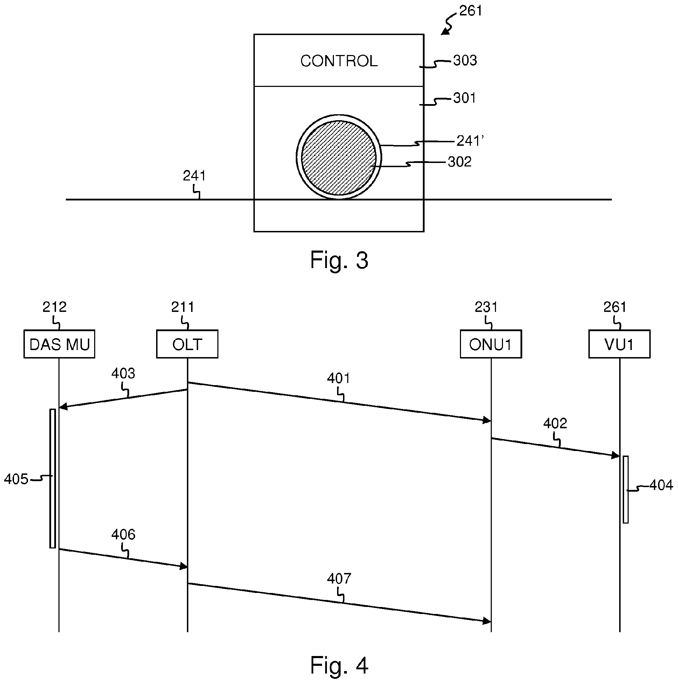

Fig. 2 shows the architecture of a Passive Optical Network wherein the ranging process for a newly connected ONU can be executed without having to interrupt upstream transmission by ONUs that are already operational. The PON shown in Fig. 2 again comprises an optical line termination OLT or 211 located in a central office CO or 210. The OLT 211 connects with a 1:n passive optical splitter 221 in optical distribution network ODN or 220 via a single-mode optical feeder fibre 250. It is noticed that the optical feeder fibre 250 may be considered to form part of the ODN 220. The 1-n passive optical splitter/multiplexer 221 further connects with n optical endpoints via n single-mode optical distribution fibres 241, 242, ..., 24n or drop fibres. It is noticed that also these distribution fibres 241, 242, ..., 24n may be considered to form part of the ODN 220. Each optical endpoint in Fig. 2 comprises an optical network unit and a vibrating unit: the first optical endpoint for instance comprises a first optical network unit ONU1 or 231 and a first vibrating unit VU1 or 261; the second optical endpoint comprises a second optical network unit ONU2 or 232 and a second vibrating unit VU2 or 262; ...; and the n'th optical endpoint comprises an n'th optical network unit ONUn or 23n and an n'th vibrating unit VUn or 26n. At the central office 210 a Distributed Acoustic Sensing measurement unit DAS MU or 212 is connected to the OLT211. This DAS measurement unit 212 further optically couples to the feeder fibre 250 via an optical coupler, for instance a 90/10 optical coupler, not drawn in Fig. 2. The operation of the DAS measurement unit 212 and vibrating units 261, 262, ..., 26n in the ranging process will be described further below with reference to Fig. 4.

Fig. 3 illustrates a sample embodiment of the vibration unit 261 of Fig. 2. The embodiment illustrated by Fig. 3 comprises a vibrating module 301 with vibrating motor 302, and control circuitry 303. The control circuitry controls activation/deactivation of the motor 302, and the frequency of the motor 302, and therefore receives control signals from the ONU where the vibrating unit 261 connects to, for instance ONU 231 in the example of Fig. 2. The motor 302 exposes the optical distribution fibre 241 that connects with the ONU 231 to vibrations, and may for instance be of the type that is used in cellular phones or smart devices that vibrate as such vibrating motors are generally available at low cost. A portion 241' of the optical distribution fibre 241 is winded as a coil around the motor 302. The number of windings is selected in view of the desired accuracy of the ranging process. In general, a higher number of windings in the optical fibre coil results in a higher accuracy of the ranging process.

Fig. 4 illustrates an example embodiment of the method to range a new ONU on a PON where other ONUs are already in operation. It is assumed that in the PON illustrated by Fig. 2 the ONUs 232 ... 23n are already in operation whereas ONU 231 is a new unranged ONU. The ranging process for new unranged ONUs like ONU 231 starts by the OLT 211 transmitting a ranging request 401 in the PON. Such ranging request 401 is transmitted at regular, given times, and it consists of a standardized signal that is recognizable by the ONUs that receive it. ONUs that have already ranged like 232 ... 23n disregard the ranging request 401 when they receive it. A new unranged ONU like 231 however upon detection of the ranging request 401 triggers the vibration unit 261 for activation of the vibration. The trigger shared between the unranged ONU 231 and the vibration unit 261 is denoted by arrow 402 in Fig. 4. Upon receipt of this trigger 402, the control circuitry 303 of vibrating unit 261 activates the motor 302 as a result of which vibrations 404 are generated where the optical fibre 241 connected to the unranged ONU 231 is exposed to. In parallel, the OLT 211 triggers the DAS measurement unit 212 to start an optical reflectometry measurement 405. The trigger sent from OLT 211 to the DAS measurement unit 212 is denoted by arrow 403 in Fig. 4. Upon receipt of this trigger 403 by the DAS measurement unit 212, the latter starts the optical reflectometry measurement 405 during which laser pulses in a certain wavelength are sent into the PON and a coherent receiver in DAS unit 212 listens for backscattered Rayleigh signals wherein the induced vibrations 404 are detected. Distributed Acoustic Sensing implies that the fibre is used by the measurement unit as a distributed sensor to detect the vibrations. During the optical reflectometry measurement 405, the DAS measurement unit 212 logs the time of pulse transmission and the time of receipt of the backscattered pulse reflections wherein the vibrations are induced. This raw time information 406 is reported to the OLT 211 which calculates therefrom the round-trip time (RTT) between OLT 211 and ONU 231, and/or the distance between OLT 211 and ONU 231, the latter distance being equivalent to the RTT. From the RTT or distance, the OLT 211 further determines the equalization delay that must be applied by ONU 231 in upstream transmissions in order to put ONU 231 at a virtual distance to OLT 211 that is identical to the virtual distance of the other, already operational ONUs 232 ... 23n. The so obtained equalization delay together with an identification of the timeslot(s) that may be used by ONU 231 for upstream transmission, jointly the ranging information 407, is thereafter transmitted to ONU 231, enabling ONU 231 to become operational and ranged with the other ONUs in the PON. Through the process illustrated by Fig. 4, ONU 231 became ranged without interrupting the upstream transmissions of the other ONUs 232 ... 23n already operational in the PON. This is advantageous in particular of these ONUs 232 ... 23n serve applications like mobile fronthauling wherein 4G mobile data or 5G mobile data have to be upstream transmitted with stringent latency requirements, for instance a maximal latency of 100 microseconds for upstream transmissions up to 10 kilometres.

In the above described embodiment it is assumed that a single unranged ONU 231 is responsive to the ranging request 401 from the OLT. In situations where plural unranged ONUs respond to the ranging request of the OLT by activating their vibration units, a mechanism must be foreseen to distinguish between the multiple unranged ONUs. One possibility could be to have different unranged ONUs generate vibrations with different frequencies, for example frequencies that are determined in function of a unique identifier of the respective ONUs, for instance the ONU serial number. Alternative solutions could lie in a protocol extension that enables the OLT to collect the addresses (or alternative identifiers) of the unranged ONUs when the vibration units of multiple unranged ONUs generate vibrations with the same frequency.

It is further remarked that in the above described embodiment, presence of a single OLT at the central office is assumed for sake of simplicity. In the field however, central offices will usually host multiple OLTs. The cost to deploy embodiments of the method for ranging an unranged ONU in situations where the central office hosts plural OLTs may be optimized by sharing the DAS across multiple OLTs. This is possible for instance by means of an optical switch coupled to the DAS measurement unit, enabling to use a single DAS measurement unit on multiple PONs.

Another remark concerns the structure of a PON. Although a PON here above has been described as the connection of a feeder fibre, a passive optical splitter/multiplexer and distribution fibres, the person skilled in the art of optical telecommunication infrastructure shall appreciate that PONs may have more complex tree-and-branch architectures with multiple passive optical splitters/multiplexers that split or combine optical signals on their path from OLT to ONU. The method for ranging an unranged ONU however can be applied, irrespective of the architecture or complexity of the PON, as the method requires only modifications at the OLT and ONU side, not in the passive intermediate optical components.

In the above embodiment, it is assumed that raw time information is conveyed in 406 from the DAS measurement unit to the OLT. It is remarked that alternative embodiments could be contemplated wherein the DAS measurement unit for instance determines the RTT/distance from the raw time information and provides this already processed info in 406 to the OLT.

As used in this application, the term "circuitry" may refer to one or more or all of the following:
(a) hardware-only circuit implementations such as implementations in only analog and/or digital circuitry and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and/or processor(s), such as microprocessor(s) or a portion of a microprocessor(s), that requires software (e.g. firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in a server, a cellular network device, or other computing or network device.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the scope of the claims are therefore intended to be embraced therein.

It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A method for ranging of an unranged optical network unit (231), abbreviated unranged ONU (231), in a passive optical network PON comprising an optical line termination OLT (211), an optical distribution network ODN (220) and a plurality of optical network units ONUs (231, 232, ..., 23n), said method comprising:
- said unranged ONU (231) receiving a ranging request (401) transmitted by said OLT (211);
- generating at or near said unranged ONU vibrations (404) where an optical fibre (241) of said ODN (220) whereto said unranged ONU (231) is coupled, is exposed to;
- performing an optical reflectometry measurement (405) at or near said OLT (211), said optical reflectometry measurement (405) being impacted by said vibrations (404);
- generating ranging information from said optical reflectometry measurement (405); and
- providing said ranging information (407) to said unranged ONU (231).

2. A method for ranging of an unranged ONU (231) according to claim 1, wherein said optical reflectometry measurement (405) is performed by a Coherent Rayleigh Optical Time Domain Reflectometry unit, abbreviated COTDR unit, using Distributed Acoustic Sensing, abbreviated DAS.

3. A method for ranging of an unranged ONU (231) according to one of the preceding claims, wherein said method is performed without interruption of data transmission by other ONUs (232, ..., 23n) already ranged in said PON.

4. A method for ranging of an unranged ONU (231) according to one of the preceding claims, wherein the frequency of said vibrations (404) generated at or near said unranged ONU (231) is determined as a function of an identity of said unranged ONU (231).

5. An optical endpoint (231, 261) for a passive optical network PON comprising an optical line termination OLT (211), an optical distribution network ODN (220) and a plurality of optical network units ONUs (231, 232, ..., 23n), said optical endpoint (231, 261) comprising:
- an optical network unit ONU (231) configured to receive a ranging request (401) transmitted by said OLT (211); and
- a vibration unit (261) integrated in or coupled to said ONU (231) and configured to expose in response to said ranging request (401) an optical fibre (241, 241') of said ODN (220) coupled to said ONU (231) to vibrations (404), said vibrations being measurable at or near said OLT (211) during an optical reflectometry measurement (405) used to generate ranging information (407) for said ONU (231).

6. An optical endpoint (231, 261) for a PON according to claim 5, wherein said vibration unit comprises a motor (302) around which said optical fibre (241, 241') of said ODN (220) coupled to said ONU (231) is coiled.

7. An optical endpoint (231, 261) for a PON according to claim 5 or claim 6, wherein the frequency of said vibrations (404) is determined as a function of an identity of said ONU (231).

8. An optical central office (210) for a passive optical network PON comprising an optical line termination OLT (211), an optical distribution network ODN (220) and a plurality of optical network units ONUs (231, 232, ..., 23n), said optical central office (210) comprising:
- said optical line termination OLT (211); and
- an optical reflectometry measurement unit (212) configured to perform an optical reflectometry measurement (405) and comprising means for measurement of vibrations (404) of an optical fibre in backscattered signals by an unranged ONU, said optical reflectometry measurement unit (212) being activatable by said OLT (211) after said OLT (211) has transmitted a ranging request (401) in said PON; and
- means for generating ranging information (407) for an unranged ONU (231) from said optical reflectometry measurement (405).
